# FASCICULE DE BREVET EUROPEEN

(11) **EP 3 312 053 B1**
(45) Date de publication et mention de la délivrance du brevet: **03.04.2019**
(21) Numéro de dépôt: 17191954.1
(22) Date de dépôt: 19.09.2017
(51) Int. Cl.: B60R 5/04

(54) **ENSEMBLE DE FIXATION D'UN LIMITEUR DE DEBATTEMENT D'UNE TABLETTE ARRIERE SUR LE VOLET ARRIERE D'UN VEHICULE AUTOMOBILE**
BEFESTIGUNGSANORDNUNG FÜR AUFKLAPPBEGRENZUNG EINER HINTEREN ABLAGE AUF DER HECKKLAPPE EINES KRAFTFAHRZEUGS
ASSEMBLY FOR ATTACHING A LIMITER FOR THE TRAVEL OF A REAR SHELF ON THE REAR DOOR OF A MOTOR VEHICLE

(30) Priorité: 18.10.2016 FR 1660065
(43) Date de publication de la demande: 25.04.2018
(73) Titulaire: PSA Automobiles SA, 78300 Poissy (FR)
(72) Inventeur: MONIER, DIDIER, 25600 VIEUX CHARMONT (FR); NICOLIER, CYRIL, 25110 BAUME LES DAMES (FR)

(56) Documents cités:
- WO-A1-97/29929
- WO-A1-2010/119196
- DE-A1- 19 652 912
- DE-U1-202009 004 736
- FR-A5- 2 256 654
- JP-A- 2009 293 685
- JP-U- H02 114 213
- US-A1- 2005 191 119

## Description

La présente invention concerne les tablettes arrière des véhicules automobiles qui sont des tablettes de rangement escamotables équipant les parties arrière de certains véhicules automobiles.

Elle concerne plus particulièrement un ensemble de fixation d'un limiteur de débattement d'une tablette arrière sur le volet arrière d'un véhicule.

Le document DE 20 2009 004 736 U1 décrit un ensemble de fixation d'un limiteur de débattement d'une tablette arrière de véhicule automobile selon le préambule de la revendication 1.

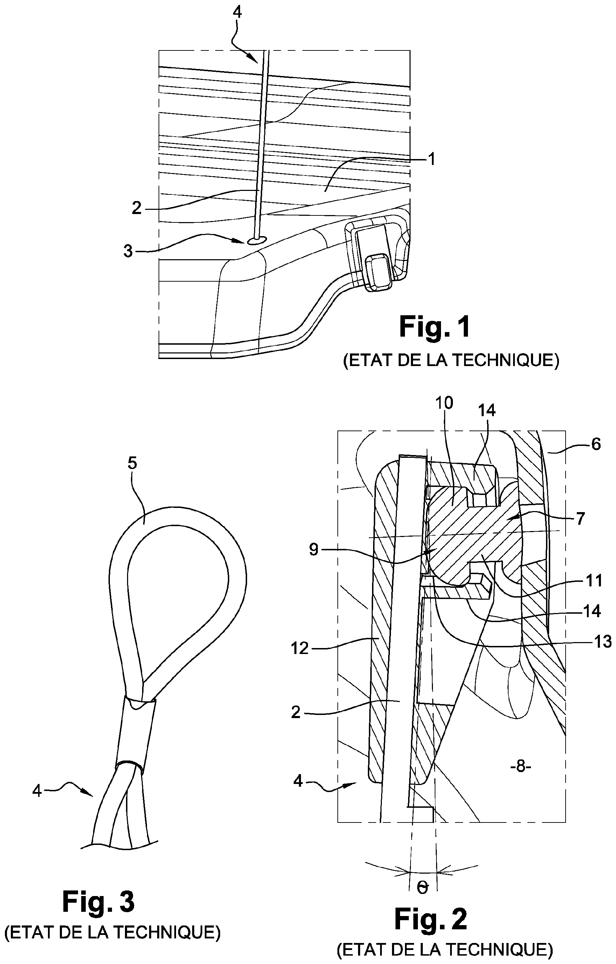

Classiquement, tel qu'illustré sur les figures 1 à 3, une tablette arrière 1 d'un véhicule automobile est montée à rotation par rapport à la structure de caisse (non représentée) du véhicule. La tablette 1 est munie d'un ou de deux cordons souples 2 (un seul cordon est représenté sur la figure 1), appelés également limiteurs de débattement, dont une première extrémité 3 est solidarisée à la tablette 1 et dont une deuxième extrémité 4, libre, peut être munie d'une boucle 5 (Fig. 3) pour fixer de manière amovible le cordon 2 le hayon, aussi appelé volet arrière 6 (Fig. 2).

La tablette 1 est agencée de telle manière que lorsque le volet arrière 6 est entraîné en rotation, pour l'ouverture du coffre, la tablette1 est également entraînée en rotation par le biais des limiteurs de débattement 2.

La boucle 5 est apte à être enfilée de manière amovible sur une embase 7 solidaire de la garniture intérieure 8 du volet 6.

La partie en saillie de l'embase 7, ou tête 9, définit une collerette 10 à bords arrondis. L'embase 7 comporte en outre une gorge 11 apte à recevoir la boucle 5. La boucle 5 peut être remplacée par un embout 12 solidaire de l'extrémité 10B du limiteur 2 et qui est apte à être clippé sur la tête 9 de l'embase 7.

L'embout 12 comporte une cavité 13 délimitée par des pattes déformables antagonistes 14, venues de matière avec l'embout 12, et dont les extrémités se terminent par des butées. Les pattes 14 s'écartent quand l'embout 12 est enfoncé sur la tête 9 par déformation élastique des pattes 14 puis, la tête 9 passée, les extrémités des pattes 14 munies des butées se resserrent derrière la tête 9 dans la gorge 11 ménagée derrière la tête 9 de l'embase 7 assurant la fixation amovible de l'ensemble embout 12 /embase 7.

L'utilisation d'un embout 12 clippé sur l'embase 7 est plus immédiate que l'enfilement d'une boucle 5. Toutefois, l'embout 12 doit respecter un angle de décalage θ suffisant pour accompagner la rotation du volet 1 sans risque de déclippage de l'embout 12.

L'axe de rotation de la tablette est parallèle à l'axe passant par les charnières solidarisant à rotation le volet sur la partie haute arrière de la carrosserie du véhicule.

Dans l'exemple décrit, l'angle de décalage maximum θ de l'embout sur l'embase est limité à 5°. Cet angle θ peut ne pas être est insuffisant pour des agencements de tablette 1 /volet 6 arrière nécessitant de forts débattements (angle de décalage θ supérieur à 5°) ; un angle de décalage θ insuffisant pouvant entrainer un déclippage intempestif de l'embout 12.

D'autre part, la force nécessaire pour déclipper l'embout 12 de la tête 9 peut être propice à un arrachement de l'embase 7 fixée directement sur la garniture 8 du volet 6.

Le but de la présente invention est de proposer un ensemble de fixation permettant d'accepter un plus grand décalage d'angle entre l'embout et l'embase. Cette solution apporte plus de liberté dans le positionnement de l'embase permettant de tenir compte de la différence d'étirement du cordon entre les positions de la tablette fermée où ouverte pour lesquels il peut y avoir un delta de 150% de la longueur du cordon.

La présente invention apporte un gain en termes de transversalité puisqu'elle peut s'adapter à plusieurs modèles de véhicule (haut de gamme ou bas de gamme).

La fixation de l'embase a également pour avantage de tenir la garniture de manière robuste sur le volet.

Le cordon reste tendu dans toute la cinématique d'ouverture et de fermeture du volet. Ce qui évite d'avoir un cordon qui a l'état de fermeture du volet pend en partie sur la tablette ce qui peut nuire à l'effet esthétique.

A cet effet, l'invention a pour objet un ensemble de fixation d'un limiteur de débattement d'une tablette arrière d'un véhicule automobile sur le volet arrière dudit véhicule, ledit limiteur étant muni d'au moins un cordon dont une première extrémité est solidarisée à la tablette arrière et dont une deuxième extrémité est munie d'un premier élément de fixation apte à être fixé de manière amovible sur une embase solidaire du volet, caractérisé en ce que le corps de l'embase comporte une tête formant une calotte sphérique pleine apte à recevoir le premier élément de fixation et une interface de fixation apte à solidariser l'embase sur le volet.

Selon une autre caractéristique, la calotte présente une hauteur et un rayon déterminés ; la hauteur de la calotte étant supérieure à son rayon.

Selon une autre caractéristique, l'interface de fixation délimite avec la tête de l'embase une gorge de largeur déterminée, apte à recevoir le premier élément de fixation.

Selon une caractéristique, le premier élément de fixation est une boucle apte à être enfilée entre la tête et l'interface de fixation de l'embase à l'intérieur de la gorge.

Selon une autre caractéristique, l'interface de fixation définit une collerette comportant un chanfrein orienté vers la gorge assurant le centrage de la boucle dans la gorge.

Selon l'invention, le premier élément de fixation est un embout apte à être clippé sur la tête de l'embase.

Selon l'invention, l'embout comporte une cavité formant une calotte sphérique creuse de même rayon que la calotte sphérique pleine de l'embase ; la profondeur de la cavité étant supérieure à son rayon et la profondeur de la cavité étant comprise entre le rayon et la hauteur de la calotte sphérique pleine.

Selon une autre caractéristique, la cavité est délimitée par un bord périphérique d'épaisseur déterminée formé par au moins deux pattes élastiquement déformables disposées en regard l'une de l'autre.

Selon une autre caractéristique, l'angle de décalage maximal de l'embout sur l'embase est inférieur ou égal à 20° entre deux positions extrêmes de l'embout sur l'embase.

Selon une autre caractéristique, l'embase est solidarisée sur le volet au moyen d'une vis traversant de part en part le corps de l'embase et la partie de garniture du volet arrière ; ladite vis maintenant le corps de l'embase et la partie de garniture sur le volet.

D'autres caractéristiques et avantages de l'invention apparaîtront plus clairement à la lecture de la description détaillée qui suit, faite à titre d'exemple non limitatif et en référence aux dessins annexés dans lesquels :
- la figure 1, déjà décrite, illustre partiellement, une tablette arrière de véhicule et l'un des deux limiteurs de débattement, ou cordon, solidarisé par une de ses extrémités à la tablette ;
- la figure 2, déjà décrite, illustre en coupe, l'autre extrémité du limiteur de débattement munie d'un embout clippé sur une embase fixée sur le volet arrière ;
- la figure 3, déjà décrite, illustre l'autre extrémité du limiteur de débattement où l'embout de la figure 2 est remplacé par une boucle ;
- la figure 4 représente schématiquement en coupe, un ensemble de fixation selon l'invention ;
- la figure 5, illustre le décalage maximal obtenu grâce à l'ensemble de fixation selon l'invention ;
- la figure 6, illustre par une vue en perspective, l'embout de l'ensemble de fixation selon l'invention ; et
- la figure 7, illustre en coupe l'embase de l'ensemble de fixation selon l'invention, fixée sur le volet arrière d'un véhicule automobile.

D'une figure à l'autre, les mêmes éléments sont repérés par les mêmes références.

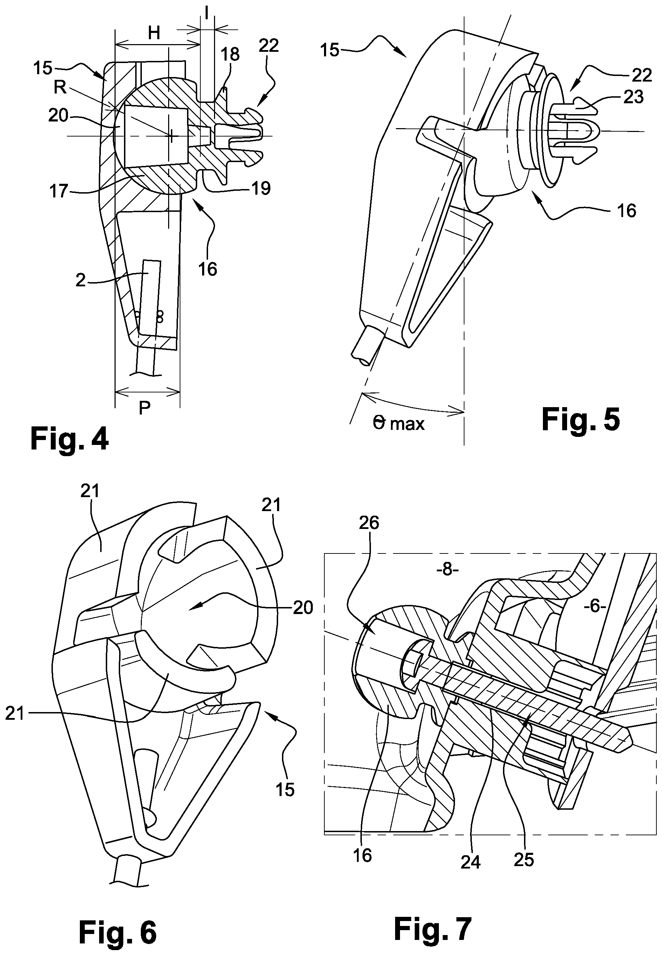

Sur la figure 4, on a représenté un ensemble de fixation selon l'invention, en coupe, comportant un embout 15 et une embase 16 dans une position d'assemblage.

L'embase 16 présente une tête 17 en forme de calotte sphérique pleine apte à coopérer avec l'embout 15. La calotte 17 présente une hauteur H et un rayon R déterminés : la hauteur H de la tête 17 étant supérieure à son rayon R.

La base de la calotte sphérique 17 délimite avec l'interface de fixation 18 de l'embase 16, en forme de collerette, une gorge 19 de largeur déterminée l. Cette gorge 19 peut être avantageusement utilisée pour y insérer une boucle telle que la boucle 5 de la figure 3.

Ainsi, l'embase 16 peut servir aussi bien pour un embout à clipper 15 que pour une boucle à enfiler 5. La périphérie de la collerette est avantageusement chanfreinée pour permettre l'auto centrage de la boucle 5 à l'intérieur de la gorge 19 ; l'embase 16 de par sa forme générale pouvant être assimilé à un « diabolo ».

L'embout 15 présente une calotte sphérique creuse 20 formant une cavité 20 apte à recevoir une partie de la tête 17 de l'embase 16. La profondeur P de la cavité 20 étant supérieure à son rayon R.

Les rayons R de la cavité 20 et de la tête 17 sont identiques. La profondeur P de la cavité 20 étant comprise entre le rayon R la hauteur H de la tête 17 (R < P < H).

Pour assurer le maintien de l'assemblage tout en laissant la mobilité de l'assemblage, la paroi ou bord de l'embout 15 délimitant la cavité 20, est conformée pour présenter trois pattes 21 réparties en regard les unes des autres à 180° l'une des autres et qui sont aptes à se déformer lors de l'introduction de l'embout 15 sur l'embase 16. La déformation élastique contrôlée des pattes 21, permet une pression suffisante pour maintenir la liaison de type rotule entre l'embout 15 et l'embase 16.

L'ensemble de fixation tel que décrit ci-dessus, permet une grande diversité de configurations possibles dans le positionnement de l'embase 16 sur différents types de volets 6 aussi bien métalliques que plastiques ou en matériau composite, avec des débattements du volet 6 et de la tablette 1 pour lesquels l'embout 15 peut accepter un angle de décalage maximal θmax de 20° sur tous les degrés de liberté offerts par la liaison de type rotule avec l'embase 16.

L'interface de fixation 18 de l'embase comporte des moyens d'ancrages 22 aptes à fixer l'embase 16 sur un support telle que la garniture intérieure 8 du volet 6.

Le moyens d'ancrage 22 tels qu'illustrées comportent trois ou quatre pattes ou clips de fixation 23 venues de matière avec le corps de l'embase 16 et qui coopèrent avec des ouvertures ménagées (non représentées) dans la garniture 8.

Pour garantir la robustesse de la fixation, le corps de l'embase 16 est traversé suivant son axe longitudinal par un alésage 24 apte à recevoir une vis 25. La tête 17 de l'embase 16 comporte un chambrage 26 centré sur le même axe longitudinal et apte à recevoir la tête de la vis 25 qui est noyée dans le chambrage 26.

La partie filetée de la vis 25 traverse de part en part le corps de l'embase 16, la garniture 8 et une partie du volet 6. La tête de vis 25 est en butée dans le chambrage 26. L'extrémité de la partie filetée, opposée à la tête vis, dépassant de la partie du volet 6, est apte à recevoir un écrou (non représenté) de manière à assurer le serrage de l'empilement constitué par le corps de l'embase 16 et la partie de garniture 8 interposée entre le volet 6 et l'embase 16, et par conséquent la fixation sûre de l'embase 16 sur le volet 6 empêchant l'arrachement de l'embase 16 de la garniture 8 au moment de déclipper l'embout 15 de la tête 17 de l'embase 16.

L'écrou peut être remplacé par un bossage taraudé (non représenté), par exemple venu de matière avec le matériau du volet 6 ou rapporté sur le matériau du volet 6.

Le cordon souple 2 peut être extensible ou inextensible longitudinalement mais l'ensemble de fixation selon l'invention permet de garder le cordon 2 tendu en début et fin de cinématique du volet 6.

## Revendications

1. Ensemble de fixation d'un limiteur de débattement d'une tablette arrière (1) d'un véhicule automobile sur une embase (16) solidaire du volet arrière (6) dudit véhicule, ledit limiteur étant muni d'au moins un cordon (2) dont une première extrémité (3) est solidarisée à la tablette arrière (1) et dont une deuxième extrémité (4) est munie d'un premier élément de fixation (5 ; 15) apte à être fixé de manière amovible sur l'embase (16) solidaire du volet (2), ledit corps de l'embase (16) comportant une tête (17) formant une calotte sphérique pleine apte à recevoir le premier élément de fixation (5 ; 15) et une interface de fixation (18) apte à solidariser l'embase (16) sur le volet (6), **caractérisé en ce que** le premier élément de fixation est un embout (15) apte à être clipper sur la tête (17) de l'embase (16) et **en ce que** l'embout (15) comporte une cavité (20) formant une calotte sphérique creuse de même rayon (R) que la calotte sphérique pleine (17) de l'embase (16) ; la profondeur (P) de la cavité (20) étant supérieure à son rayon (R) et la profondeur (P) de la cavité (20) étant comprise entre le rayon (R) et la hauteur (H) de la calotte sphérique pleine (17).

2. Ensemble de fixation selon la revendication 1, **caractérisé en ce que** la calotte (17) présente une hauteur (H) et un rayon (R) déterminés ; la hauteur (H) de la calotte (17) étant supérieure à son rayon (R).

3. Ensemble de fixation selon l'une des revendications précédentes, **caractérisé en ce que** l'interface de fixation (18) délimite avec la tête (17) de l'embase (16) une gorge (19) de largeur (l) déterminée, apte à recevoir le premier élément de fixation (5).

4. Ensemble de fixation selon la revendication précédente, **caractérisé en ce que** le premier élément de fixation est une boucle (5) apte à être enfilée entre la tête (16) et l'interface de fixation (18) de l'embase (16) à l'intérieur de la gorge (19).

5. Ensemble de fixation selon la revendication précédente, **caractérisé en ce que** l'interface de fixation (18) définit une collerette comportant un chanfrein orienté vers la gorge (19) assurant le centrage de la boucle (5) dans la gorge (19).

6. Ensemble de fixation selon l'une des revendications précédentes, caractérisé en ce la cavité (20) est délimitée par un bord périphérique d'épaisseur déterminée formé par au moins deux pattes (21) élastiquement déformables disposées en regard l'une de l'autre.

7. Ensemble de fixation selon l'une des revendications précédentes, **caractérisé en ce que** l'angle de décalage maximal (θmax) de l'embout (15) sur l'embase (16) est inférieur ou égal à 20° entre deux positions extrêmes de l'embout (15) sur l'embase (16).

8. Ensemble de fixation selon l'une des revendications précédentes, dans lequel le volet arrière (6) comporte une garniture intérieure (8), ledit ensemble étant **caractérisé en ce que** l'embase (16) est solidarisée sur le volet (6) au moyen d'une vis (25) traversant de part en part le corps de l'embase (16) et la partie de garniture (8) du volet arrière (6) ; ladite vis (25) maintenant le corps de l'embase (16) et la partie de garniture (8) sur le volet (6).

## Patentansprüche

1. Befestigungsanordnung eines Aufklappbegrenzers einer hinteren Ablage (1) eines Kraftfahrzeugs auf einem Sockel (16), der fest mit der Heckklappe (6) des Fahrzeugs verbunden ist, wobei der Begrenzer mit mindestens einer Kordel (2) versehen ist, von der ein erstes Ende (3) fest mit einer hinteren Ablage (1) verbunden ist, und von der ein zweites Ende (4) mit einem ersten Befestigungselement (5; 15) versehen ist, das geeignet ist, abnehmbar auf dem Sockel (16), der fest mit der Klappe (2) verbunden ist, befestigt zu sein, wobei der Körper des Sockels (16) einen Kopf (17) umfasst, der eine massive sphärische Haube bildet, die geeignet ist, das erste Befestigungselement (5; 15) aufzunehmen, und eine Befestigungsschnittfläche (18), die geeignet ist, um den Sockel (16) fest auf der Klappe (6) zu verbinden, **dadurch gekennzeichnet, dass** das erste Befestigungselement ein Ansatz (15) ist, der geeignet ist, auf dem Kopf (17) des Sockels (16) geclipst zu sein, und dass der Ansatz (15) einen Hohlraum (20) umfasst, der eine hohle sphärische Haube mit demselben Radius (R) wie die massive sphärische Haube (17) des Sockels (16) bildet; wobei die Tiefe (P) des Hohlraums (20) größer ist als sein Radius (R) und die Tiefe (P) des Hohlraums (20) zwischen dem Radius (R) und der Höhe (H) der massiven sphärischen Haube (17) liegt.

2. Befestigungsanordnung nach Anspruch 1, **dadurch gekennzeichnet, dass** die Haube (17) eine bestimmte Höhe (H) und einen bestimmten Radius (R) aufweist; wobei die Höhe (H) der Haube (17) größer ist als ihr Radius (R).

3. Befestigungsanordnung nach einem der vorstehenden Ansprüche, **dadurch gekennzeichnet, dass** die Befestigungsschnittfläche (18) mit dem Kopf (17) des Sockels (16) eine Nut (19) mit bestimmter Breite (l) abgrenzt, die geeignet ist, das erste Befestigungselement (5) aufzunehmen.

4. Befestigungsanordnung nach dem vorstehenden Anspruch, **dadurch gekennzeichnet, dass** das erste Befestigungselement eine Schleife (5) ist, die angepasst ist, um zwischen dem Kopf (16) und der Befestigungsschnittfläche (18) des Sockels (16) in dem Inneren der Nut (19) aufgezogen zu werden.

5. Befestigungsanordnung nach dem vorstehenden Anspruch, **dadurch gekennzeichnet, dass** die Befestigungsschnittfläche (18) einen Flansch definiert, der eine Abfasung umfasst, die zu der Nut (19) ausgerichtet ist, die das Zentrieren der Schleife (5) in der Nut (19) sicherstellt.

6. Befestigungsanordnung nach einem der vorstehenden Ansprüche, **dadurch gekennzeichnet, dass** der Hohlraum (20) von einem umfänglichen Rand mit bestimmter Stärke abgegrenzt ist, der aus mindestens zwei elastisch verformbaren Pratzen (21) gebildet ist, die einander gegenüberliegend angeordnet sind.

7. Befestigungsanordnung nach einem der vorstehenden Ansprüche, **dadurch gekennzeichnet, dass** der maximale Versatzwinkel (θmax) des Ansatzes (15) auf dem Sockel (16) kleiner oder gleich 20° zwischen zwei Endpositionen des Ansatzes (15) auf dem Sockel (16) ist.

8. Befestigungsanordnung nach einem der vorstehenden Ansprüche, wobei die Heckklappe (6) eine innere Verkleidung (8) umfasst, Anordnung **dadurch gekennzeichnet, dass** der Sockel (16) fest auf der Klappe (6) mittels einer Schraube (25) verbunden ist, die den Körper des Sockels (16) und den Verkleidungsteil (8) der Heckklappe (6) vollständig durchquert; wobei die Schraube (25) den Körper des Sockels (16) und den Verkleidungsteil (8) auf der Klappe (6) hält.

## Claims

1. An assembly for attaching a limiter for the travel of a rear shelf (1) of a motor vehicle on a base (16) integral with the rear door (6) of said vehicle, said limiter being provided with at least one cord (2), a first end (3) of which is secured to the rear shelf (1), and a second end (4) of which is provided with a first attachment element (5; 15) able to be attached in a detachable manner on the base (16) integral with the door (2), said body of the base (16) comprising a head (17) forming a solid spherical cap able to receive the first attachment element (5; 15), and an attachment interface (18) able to secure the base (16) on the door (6), **characterized in that** the first attachment element is an end piece (15) able to be clipped on the head (17) of the base (16) and **in that** the end piece (15) comprises a cavity (20) forming a hollow spherical cap of the same radius (R) as the solid spherical cap (17) of the base (16); the depth (P) of the cavity (20) being greater than its radius (R) and the depth (P) of the cavity (20) being comprised between the radius (R) and the height (H) of the solid spherical cap (17).

2. The assembly for attaching according to Claim 1, **characterized in that** the cap (17) has a defined height (H) and radius (R); the height (H) of the cap (17) being greater than its radius (R).

3. The assembly for attaching according to one of the preceding claims, **characterized in that** the attachment interface (18) delimits with the head (17) of the base (16) a groove (19) of defined width (1), able to receive the first attachment element (5).

4. The assembly for attaching according to the preceding claim, **characterized in that** the first attachment element is a loop (5) able to be inserted between the head (16) and the attachment interface (18) of the base (16) in the interior of the groove (19).

5. The assembly for attaching according to the preceding claim, **characterized in that** the attachment interface (18) defines a flange comprising a chamfer oriented towards the groove (19) ensuring the centring of the loop (5) in the groove (19).

6. The assembly for attaching according to one of the preceding claims, **characterized in that** the cavity (20) is delimited by a peripheral edge of defined thickness formed by at least two elastically deformable lugs (21) arranged facing one another.

7. The assembly for attaching according to one of the preceding claims, **characterized in that** the maximum offset angle (θmax) of the end piece (15) on the base (16) is less than or equal to 20° between two extreme positions of the end piece (15) on the base (16).

8. The assembly for attaching according to one of the preceding claims, in which the rear door (6) comprises an interior lining (8), said assembly being **characterized in that** the base (16) is secured on the door (6) by means of a screw (25) passing through the body of the base (16) and the lining part (8) of the rear door (6); said screw (25) holding in place the body of the base (16) and the lining part (8) on the door (6).
